(19) Europäisches Patentamt
European Patent Office
Office européen des brevets

(11) **EP 3 651 449 B1**

(12) **FASCICULE DE BREVET EUROPEEN**

(45) Date de publication et mention
de la délivrance du brevet:
**11.08.2021 Bulletin 2021/32**

(21) Numéro de dépôt: **19206813.8**

(22) Date de dépôt: **04.11.2019**

(51) Int Cl.:
*H04N 5/33* (2006.01)          *H04N 5/365* (2011.01)
*H04N 5/369* (2011.01)          *G01J 5/00* (2006.01)
*G01J 5/20* (2006.01)          *G01J 5/22* (2006.01)
*G01J 5/24* (2006.01)

(54) **PROCEDE DE TRAITEMENT D'UNE IMAGE**

VERARBEITUNGSVERFAHREN EINES BILDS

METHOD FOR PROCESSING AN IMAGE

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **09.11.2018 FR 1860396**

(43) Date de publication de la demande:
**13.05.2020 Bulletin 2020/20**

(73) Titulaire: **Schneider Electric Industries SAS
92500 Rueil Malmaison (FR)**

(72) Inventeur: **CHIESI, Laurent
38050 GRENOBLE Cedex 09 (FR)**

(74) Mandataire: **Brevalex
95, rue d'Amsterdam
75378 Paris Cedex 8 (FR)**

(56) Documents cités:
**EP-A1- 2 012 101          WO-A1-2010/125281
WO-A1-2018/132743          US-A1- 2011 068 272
US-A1- 2017 219 436**

**Description**

**DOMAINE TECHNIQUE**

La présente invention concerne un procédé de traitement d'une image brute collectée par un imageur pourvu d'une matrice de bolomètres. En particulier, le procédé de traitement selon la présente invention est destiné à corriger les non-uniformités dues aux dispersions des caractéristiques des bolomètres de l'imageur.
La présente invention concerne également un programme d'ordinateur susceptible de mettre en œuvre toutes les étapes du procédé selon la présente invention.
L'invention concerne enfin un imageur comprenant des bolomètres et un calculateur mettant en œuvre le programme d'ordinateur.

**ÉTAT DE LA TECHNIQUE ANTÉRIEURE**

Un détecteur infrarouge connu de l'état de la technique comprend en général des bolomètres organisés de manière matricielle selon n lignes et m colonnes.
Lorsqu'ils sont exposés à une scène en vue d'une acquisition d'une image, ces bolomètres, sensibles à la température de la scène, voient leur résistance électrique varier. En d'autres termes, le courant circulant dans chacun des bolomètres est dépendant de la température de la scène, mais également de la température ambiante.
En particulier, la mesure $S_p(i,j)$ des bolomètres $B_{pix\_}(i,j)$ d'une matrice de bolomètres évolue selon la loi suivante :

$$S_P(i,j) = Resp(T_{amb})(T_{scène} - T_{amb}) + S_{0,T_{amb}}$$

Où :

- $T_{amb}$ est la température ambiante, et plus particulièrement la température de l'imageur ;
- $T_{scène}$ est la température de la scène vue par le bolomètre,
- $Resp(T_{amb})$ est la responsivité du bolomètre, cette dernière dépend de la température ambiante ;
- $S_{0,T_{amb}}$ est la valeur de sortie du bolomètre pour une température de scène égale à la température ambiante.

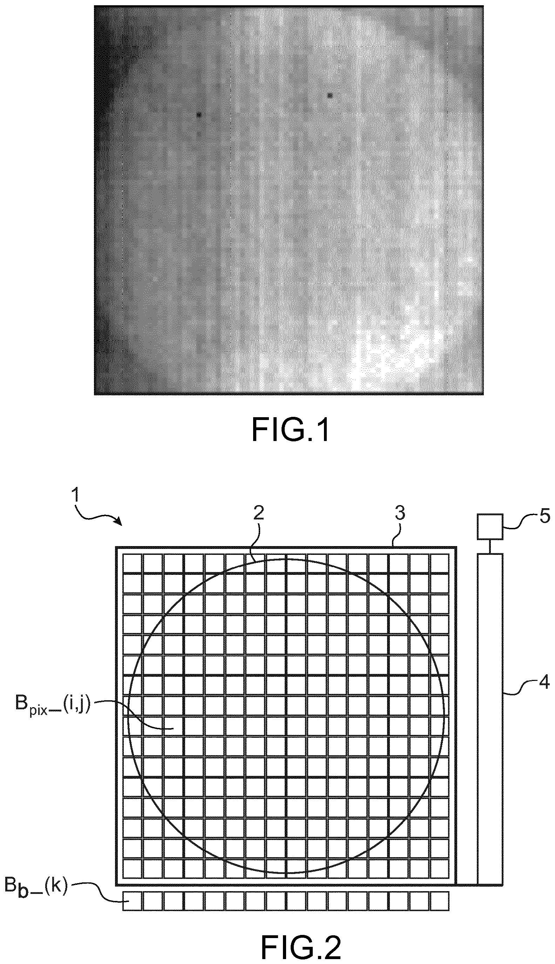

Le terme $Resp(T_{amb})$ dépend des matériaux utilisés pour la conception du bolomètre ainsi que de l'architecture de ce dernier.
La déduction de la température de scène impose de connaître la température ambiante $T_{amb}$, de sorte que l'imageur est en général également pourvu d'un capteur de température.
L'imageur peut être également pourvu de bolomètres additionnels, dits bolomètres aveugles, et non exposés à la scène. Le courant circulant dans ces derniers ne dépend alors que de la température ambiante.
Ainsi, selon une telle configuration, la détermination de la variation de résistance d'un bolomètre exposé est basée sur une mesure différentielle entre les courants circulant dans ledit bolomètre exposé et un bolomètre aveugle.
En général, chaque colonne de la matrice de bolomètres est associée à un bolomètre aveugle qui est mis en œuvre pour chacun des bolomètres de ladite colonne lors de la mesure différentielle. Toutefois, d'autres configurations peuvent être envisagées, et notamment la mise en commun d'un unique bolomètre aveugle pour plusieurs colonnes de bolomètres.
L'image brute (figure 1) d'une scène susceptible d'être obtenue avec un tel dispositif n'est en général pas exploitable, et nécessite un traitement additionnel.
En particulier, l'image illustrée à la figure 1 révèle le positionnement des bolomètres du détecteur, et plus particulièrement une non-uniformité (« effet de pixelisation »). Cet effet trouve son origine dans la dispersion importante des résistances électriques d'un bolomètre à l'autre.
L'image présente également un aspect colonnaire qui est dû à la dispersion des résistances électriques entre les bolomètres aveugles.
Afin de pallier ces problèmes, différentes solutions ont pu être envisagées.
Il a pu, notamment, être proposé de mettre en œuvre un obturateur mécanique sur l'imageur. En particulier, l'obturateur mécanique est placé devant le détecteur de manière à collecter une image de référence relative à la température ambiante, qui est par la suite soustraite à l'image de la scène.
Cet agencement, relativement simple sur son principe, n'est toutefois pas satisfaisant.
En effet, la mise en œuvre d'un obturateur, et la motorisation qui lui est associée, posent à la fois des problèmes de coûts et d'encombrement.
Par ailleurs, l'image de référence doit être rafraîchie dès lors que la température ambiante varie.

De manière alternative, il a été proposé de caractériser la réponse en température du détecteur, et notamment de chacun de ses bolomètres.

Cette caractérisation comporte des mesures de référence à différentes températures avec l'ensemble des bolomètres de l'imageur obturés avec un obturateur.

Les mesures de références permettent alors de déterminer l'évolution en température de chacun des bolomètres et ainsi construire des tables de calibration conservées dans un espace mémoire du détecteur.

Ainsi, en fonctionnement, le détecteur corrige l'image brute par soustraction, pour chaque bolomètre, des valeurs obtenues par interpolation à partir des tables de calibration.

Cette solution, qui permet de réduire l'effet de non uniformité de l'image d'un bolomètre à l'autre, n'est toutefois pas satisfaisante.

En effet, la procédure d'acquisition des mesures de référence est longue, et génère un surcoût de fabrication du détecteur.

Par ailleurs, l'espace mémoire dédié à la sauvegarde des tables de calibration, du fait du coût qui lui est associé, n'est pas souhaitable.

Une troisième méthode basée sur des algorithmes permettant de corriger la non-uniformité de l'image a été proposée dans les documents EP2940991 B1 et US2010237245 A1.

Enfin, une quatrième méthode basée sur la correction de chacune des colonnes d'une matrice de bolomètres à partir d'une lecture d'un bolomètre aveugle associé avec la dite colonne est divulguée dans le document EP2012101 B1.

Ces méthodes connues de l'état de la technique ne sont pas non plus satisfaisantes.

En effet, ces méthodes sont généralement fastidieuses à mettre en œuvre, et leur robustesse est discutable.

Par ailleurs, ces méthodes nécessitent la mise en œuvre de moyens de calculs lourds qui pénalisent d'autant le coût des détecteurs dans lesquelles elles sont mises en œuvre.

Un but de la présente invention est de proposer un procédé de traitement d'image collectée par un imageur pourvu de bolomètres plus simples que les techniques connues de l'état de la technique, et ne nécessitant pas la mise en œuvre de pièces mécaniques ainsi que la robotisation qui leur est associée.

Un autre but de l'invention est de proposer un procédé permettant de corriger l'effet colonnaire observé sur une image brute.

## EXPOSÉ DE L'INVENTION

Les buts de la présente invention sont, au moins en partie, atteints par un procédé de traitement d'une image brute caractérisée par des mesures brutes $S_p(i,j)$ associées à des bolomètres actifs $B_{pix\_}(i,j)$ d'un imageur agencés de manière matricielle selon n lignes et m colonnes, l'imageur est à une température ambiante $T_{amb}$, et comprend en outre des bolomètres aveugles $B_{b\_}(k)$, chaque bolomètre aveugle $P_{b\_}(k)$ étant mis en œuvre pour la mesure différentielle des bolomètres actifs $B_{pix\_}(i,j)$ d'au moins une colonne de bolomètres qui lui est propre, avantageusement chaque bolomètre aveugle $B_{b\_}(k)$ est associé à une seule colonne de bolomètres actifs $B_{pix\_}(i,j)$, le procédé, exécuté par un calculateur pourvu d'une mémoire, comprend les étapes suivantes :

a) une étape de calcul des résistances électriques $R_{Tc}(i,j)$ et $R_{Tc}(k)$, à la température $T_{amb}$, respectivement, des bolomètres actifs et aveugles à partir de leurs résistances électriques à une température de référence $T_r$, respectives, $R_{Tr}(i,j)$ et $R_{Tr}(k)$, mémorisées dans la mémoire ;

b) une étape de détermination des températures effectivement mesurées $T_{sc}(i,j)$ par chacun des bolomètres actifs $B_{pix\_}(i,j)$ à partir des résistances électriques calculées à l'étape a) et des mesures brutes $S_p(i,j)$.

Selon un mode de mise en œuvre, l'étape a) de calcul des résistances électriques $R_{Tc}(i,j)$ et $R_{Tc}(k)$, à la température $T_{amb}$, est exécutée à partir d'une énergie d'activation $E_a$ représentative du matériau formant chacun des bolomètres actifs $B_{pix\_}(i,j)$ et aveugles $B_{b\_}(k)$.

Selon un mode de mise en œuvre, le calcul des résistances électriques $R_{Tamb}(i,j)$ et $R_{Tamb}(k)$ est exécuté selon l'une et l'autre des relations suivantes :

$$R_{Tamb}(i,j) = R_{\mathrm{Tr}}(i,j) \cdot e^{\frac{qE_a}{k}\left(\frac{1}{T_{amb}} - \frac{1}{T_r}\right)}$$

et

$$R_{Tamb}(k) = R_{\text{Tr}}(k) \cdot e^{\frac{qE_a}{k}\left(\frac{1}{T_{amb}} - \frac{1}{T_r}\right)}$$

Selon un mode de mise en œuvre, la température effectivement mesurée $T_{sc}(i,j)$ par un bolomètre actif $B_{pix\_}(i,j)$ vérifie la relation suivante :

$$S_P(i,j) = Resp(T_{amb}, i, j)(T_{sc}(i,j) - T_{amb}) + S_{0,T_{amb}}(i,j)$$

Où :

- Resp($T_c$,i,j) est la responsivité du bolomètre ;
- $S_{0,Tamb}$(i,j) est la valeur de sortie du bolomètre actif $B_{pix\_}$(i,j) pour une température effectivement mesurée égale à la température ambiante.

Selon un mode de mise en œuvre, la valeur $S_{0,Tamb}$(i,j) associée à un bolomètre actif $B_{pix\_}$(i,j) d'une colonne est fonction de la différence entre les courants $I_{0,pix}$(i,j) et $I_{0,b}$(j) susceptibles de circuler, respectivement, dans ledit bolomètre actif $B_{pix\_}$(i,j) et le bolomètre aveugle $B_{b\_}$(k) auquel est associée la colonne pour une température effectivement mesurée égale à la température ambiante.

Selon un mode de mise en œuvre, l'étape a) est précédée d'une étape a1) d'acquisition des mesures brutes $S_p$(i,j) au niveau d'amplificateurs à transimpédance capacitive agencés de sorte que l'ensemble des bolomètres actifs $B_{pix\_}$(i,j) de chaque colonne ainsi que le bolomètre aveugle $B_{b\_}$(k) auquel est associée ladite colonne sont connectés à une entrée négative d'un des amplificateurs à transimpédance capacitive, l'entrée positive dudit amplificateur recevant une tension de référence.

Selon un mode de mise en œuvre, entre chacun des bolomètres, actifs et aveugles, et l'amplificateur à transimpédance capacitive auquel ces derniers sont connectées, viennent s'interposer des dispositifs interrupteurs, notamment des transistors, commandés par le calculateur.

Selon un mode de mise en œuvre, préalablement à la mise en œuvre du procédé, une étape de mesure des résistances électriques $R_{Tr}$(i,j) et $R_{Tr}$(k) est exécutée.

Selon un mode de mise en œuvre, la détermination de la résistance électrique $R_{Tr}$(i,j) et $R_{Tr}$(k) d'un bolomètre actif $B_{pix\_}$(i,j) d'une colonne ou du bolomètre aveugle $B_{b\_}$(k) auquel est associée ladite colonne comprend une mesure du courant susceptible de circuler dans le bolomètre concerné.

Selon un mode de mise en œuvre, I la mesure du courant susceptible de circuler dans le bolomètre concerné comprend la fermeture de l'interrupteur s'interposant entre ledit bolomètre concerné et l'amplificateur à transimpédance capacitive, les autres interrupteurs étant maintenus ouverts.

L'invention concerne également un programme d'ordinateur, qui lorsqu'il est mis en œuvre par un calculateur, permet d'exécuter le procédé selon la présente invention.

L'invention concerne également un imageur pourvu

- de bolomètres actifs $B_{pix\_}$(i,j), d'un imageur, agencés de manière matricielle selon n lignes et m colonnes ;
- de bolomètres aveugles $B_{b\_}$(k), chaque bolomètre aveugle $P_{b\_}$(k) étant mis en œuvre pour la mesure différentielle des bolomètres actifs $B_{pix\_}$(i,j) d'au moins une colonne de bolomètres qui lui est propre, avantageusement chaque bolomètre aveugle $B_{b\_}$(k) est associé à une seule colonne de bolomètres actifs $B_{pix\_}$(i,j)
- un calculateur doté du programme d'ordinateur selon la présente invention.

L'invention concerne également la mise en œuvre de l'imageur selon la présente invention pour la détection, notamment la détection de personnes, dans une pièce.

## BRÈVE DESCRIPTION DES DESSINS

D'autres caractéristiques et avantages apparaîtront dans la description qui va suivre d'un procédé de traitement d'une image, donné à titre d'exemples non limitatifs, en référence aux dessins annexés dans lesquels :

- la figure 1 est une image brute d'une scène obtenue par un imageur pourvu de bolomètres agencés selon une matrice de 80 lignes par 80 colonnes ;
- la figure 2 est une représentation schématique d'un imageur pourvu d'une lentille montée sur un diaphragme susceptible d'être mis en œuvre selon la présente invention ;

- la figure 3 est une représentation d'un schéma électrique équivalent de l'imageur, la figure 3 représente notamment une première colonne Ci, et une $X^{ième}$ colonne $C_X$ de bolomètres actifs $B_{pix\_}(i,j)$ ;
- la figure 4a représente un schéma électrique équivalent résultant de la fermeture d'un unique dispositif interrupteur d'un bolomètre actif donnée ;
- la figure 4b représente un schéma électrique équivalent résultant de fermeture d'un unique transistor de commande d'un bolomètre aveugle donnée, aucun courant ne circulant dans les autres bolomètres actifs et aveugles.

## EXPOSÉ DÉTAILLÉ DE MODES DE RÉALISATION PARTICULIERS

La présente invention va maintenant être décrite en relation avec les figures 1 à 4b.

La figure 2 représente un imageur pourvu d'une pluralité de bolomètres actifs, notés $B_{pix\_}(i,j)$, agencés de manière matricielle selon n lignes (notées « $L_i$ ») et m colonnes (notées « $C_j$ »).

Un bolomètre indicé i, j correspond à un bolomètre disposé à l'intersection de la ligne i avec la colonne j.

L'imageur de la figure 2 peut également comprendre une pluralité de bolomètres aveugles $B_{b\_}(k)$.

Chaque bolomètre aveugle $P_{b\_}(k)$ est mis en œuvre pour la mesure différentielle des bolomètres actifs $B_{pix\_}(i,j)$ d'au moins une colonne de bolomètres qui lui est propre.

En particulier, chaque bolomètre aveugle $B_{b\_}(k)$ est associé à une seule colonne ($C_j$) de bolomètres actifs $B_{pix\_}(i,j)$.

L'imageur 1 comprend en outre un calculateur 4 doté d'un processeur de calcul destiné à exécuter les différentes étapes du procédé selon la présente invention.

Le calculateur peut également comprendre un espace mémoire pour sauvegarder des mesures brutes, et/ou des paramètres utiles au fonctionnement de l'imageur 1.

Enfin, l'imageur 1 peut comprendre une sonde de température 5 destinée à évaluer la température de l'environnement dans lequel se trouve ledit détecteur. La sonde de température peut, par exemple, comprendre une jonction PN.

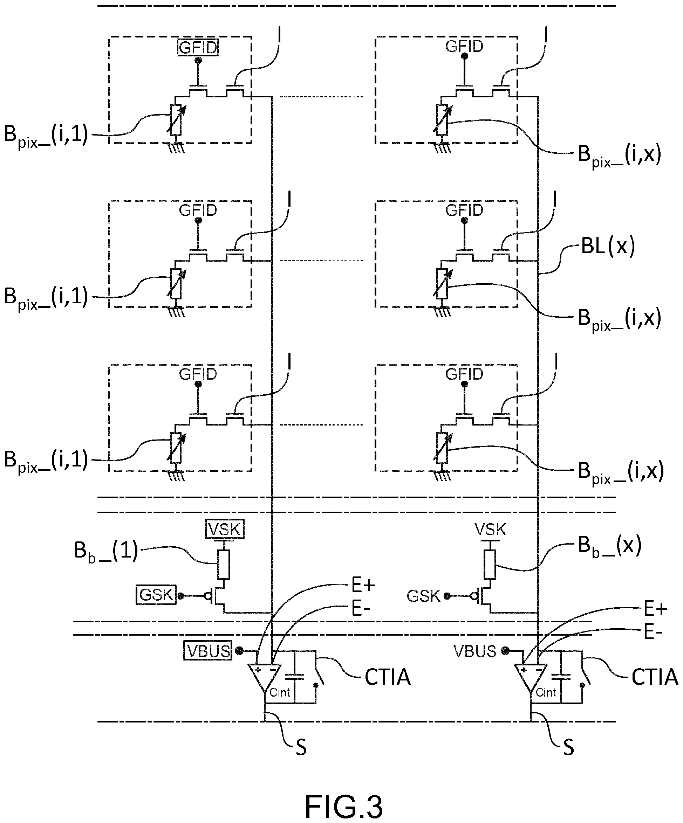

La figure 3 est une représentation d'un schéma électrique équivalent de l'imageur 1. La figure 3 représente notamment une première colonne Ci, et une $X^{ième}$ colonne $C_X$ de bolomètres actifs $B_{pix\_}(i,j)$.

Chacun des bolomètres actifs $B_{pix\_}(i,j)$ d'une colonne $C_j$, ainsi que le bolomètre aveugle $B_{b\_}(j)$ auquel est associé ladite colonne, est connecté à une ligne commune BL(j) via un dispositif interrupteur I, et notamment un transistor, commandé par le calculateur.

L'extrémité de chacune des lignes communes BL(k) est connectée à une entrée négative E$^-$ d'un amplificateur à transimpédance capacitive CTIA. L'entrée positive E$^+$ se voit, pour sa part, imposée une tension de référence $V_{bus}$.

La mise en œuvre des dispositifs interrupteurs I permet d'adresser de manière individuelle chacun des bolomètres actifs ou aveugles et ainsi mesurer leur signal de sortie au niveau d'un des amplificateurs à transimpédance capacitive CTIA.

Le procédé selon la présente invention propose de corriger les défauts d'une image brute caractérisée par des mesures brutes $S_p(i,j)$ associées aux bolomètres actifs $B_{pix\_}(i,j)$.

Le procédé selon la présente invention comprend une étape a) de calcul des résistances électriques $R_{Tc}(i,j)$ et $R_{Tc}(k)$, à la température $T_{amb}$, respectivement, des bolomètres actifs $B_{pix\_}(i,j)$ et aveugles $B_{b\_}(k)$.

Ces résistances électriques sont notamment calculées à partir des résistances électriques, desdits bolomètres, à une température de référence $T_r$, respectives, $R_{Tr}(i,j)$ et $R_{Tr}(k)$, mémorisées dans la mémoire du calculateur.

Les résistances électriques $R_{Tr}(i,j)$ et $R_{Tr}(k)$, respectivement, des bolomètres actifs $B_{pix\_}(i,j)$ et des bolomètres aveugles $B_{b\_}(k)$ à la température de référence $T_r$, peuvent être déterminées préalablement à l'étape a), lors d'une étape a1).

Par exemple l'étape a1) est exécutée lors de la fabrication de l'imageur.

L'étape a1) comprend alors une première sous-étape a1$_1$) de détermination des résistances électriques à la température de référence de chacun de bolomètres actifs $B_{pix\_}(i,j)$.

La première sous-étape a1$_1$), met en œuvre un masque, maintenu à la température de référence $T_r$, disposé devant l'imageur 1 (il est entendu que l'imageur est également maintenu à la température de référence $T_r$).

Le courant circulant dans chacun des bolomètres actifs $B_{pix\_}(i,j)$ est alors mesuré de manière individuelle.

En particulier, la mesure du courant $I_{pix\_}(a,b)$ d'un bolomètre actif $B_{pix\_}(a,b)$ donnée comprend la fermeture du dispositif interrupteur le connectant à la ligne commune BL(b), les autres interrupteurs étant maintenus ouverts. Les interrupteurs GSK associés aux bolomètres aveugles sont également maintenus ouvert de manière à annuler le courant susceptible de les traverser.

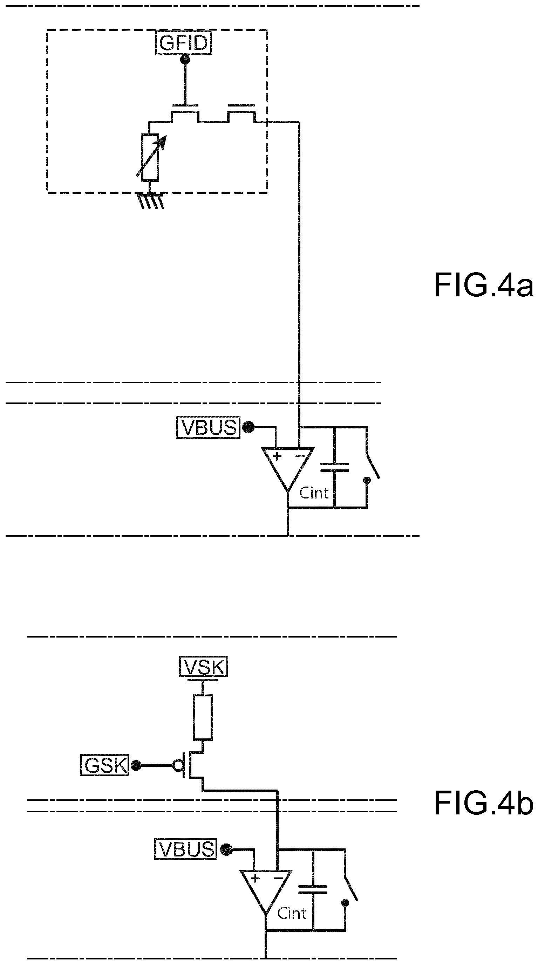

Le schéma électrique équivalent résultant de cette configuration est présenté à la figure 4a.

La tension $V_{CTIA}$ en sortie S de l'amplificateur à transimpédance capacitive CTIA associé à la colonne « b » vérifie la relation (1) suivante :

$$V_{CTIA} = V_{BUS} + \frac{T_{int}}{C_{int}} \cdot I_{pix\_}(a,b) \qquad (1)$$

$C_{int}$ étant une capacitance de l'amplificateur CTIA et $T_{int}$ un temps d'intégration lors de l'étape de mesure du courant $I_{pix\_}(a,b)$.

Par ailleurs, le courant $I_{pix\_}(a,b)$ est fonction des caractéristiques géométriques et électriques du bolomètre ainsi que des caractéristiques pilotant ce dernier.

Plus particulièrement, le courant $I_{pix\_}(a,b)$ vérifie également la relation (2) suivante :

$$I_{pix\_}(a,b) = \frac{1}{2} \cdot k_n \cdot \frac{W}{L} \cdot \left( GFID - R_{Tr\_}(a,b) \cdot I_{pix\_}(a,b) - V_{th,N} \right)^2 \qquad (2)$$

$\mu_n$ étant la mobilité électronique dans le matériau formant le bolomètre considéré ;
$C_{ox}$ étant la capacité surfacique de la grille du transistor pilotant le bolomètre ;
$k_n = \mu_n.C_{ox}$ étant un facteur de gain NMOS
$W/L$ étant le rapport largeur sur longueur du canal du transistor pilotant le bolomètre,
$V_{th,N}$ étant la tension seuil transistor NMOS pilotant le bolomètre.

La résistance électrique de référence $R_{Tr}(i,j)$, à la température de référence $T_r$ est ainsi déduite des relations (1) et (2).

L'étape a1) comprend alors une seconde sous étape a1$_2$) de détermination des résistances électriques à la température de références de chacun de bolomètres aveugles $B_b\_(k)$.

La sous-étape a1$_2$) est similaire à la sous-étape a1$_1$).

En particulier, la seconde sous-étape a1$_2$), met également en œuvre le masque, maintenu à la température de référence $T_r$, disposé devant l'imageur 1 (il est entendu que l'imageur est également maintenu à la température de référence $T_r$).

Le courant circulant dans chacun de bolomètres aveugles $B_b\_(k)$ est alors mesuré de manière individuelle.

En particulier, la mesure du courant $I_b\_(l)$ d'un bolomètre aveugle $B_b\_(l)$ donnée comprend la fermeture du transistor GSK pilotant ce dernier afin de le connecter à la ligne commune BL(l), les autres interrupteurs étant maintenus ouverts.

Le schéma électrique équivalent résultant de cette configuration est présenté à la figure 4b.

La tension $V_{CTIA}$ en sortie S de l'amplificateur à transimpédance capacitive CTIA associé à la colonne « l » vérifie la relation (3) suivante :

$$V_{CTIA} = V_{BUS} + \frac{T_{int}}{C_{int}} \cdot I_{b\_}(l) \quad (3)$$

Par ailleurs, le courant $I_b\_(l)$ est fonction des caractéristiques géométriques et électriques du bolomètre ainsi que des caractéristiques pilotant ce dernier.

Plus particulièrement, le courant $I_b\_(l)$ vérifie également la relation (4) suivante :

$$I_{b\_}(l) = \frac{1}{2} \cdot k_p \cdot \frac{W}{L} \cdot \left( V_{th,P} + VSK - R_{Tr\_}(l) \cdot I_{b\_}(l) \right)^2 \qquad (4)$$

$\mu_p$ étant la mobilité des trous dans le matériau formant le bolomètre considéré ;
$C_{ox}$ étant la capacité surfacique de la grille du transistor pilotant le bolomètre ;
$K_p = \mu_p.C_{ox}$ étant un facteur de gain PMOS
$W/L$ étant le rapport largeur sur longueur du canal du transistor pilotant le bolomètre,
$V_{th,P}$ étant la tension seuil du transistor PMOS pilotant le bolomètre.

La résistance électrique de référence $R_{Tr}(l)$, à la température de référence $T_r$ est ainsi déduite des relations (3) et (4).

La détermination des résistances électriques de référence $R_{Tr}(i,j)$ et $R_{Tr}(k)$ met ainsi en œuvre des composants usuellement intégrés dans un imageur. En d'autres termes, il n'est pas nécessaire de modifier l'imageur afin de mettre en œuvre le procédé selon la présente invention.

Le calcul des résistances électriques à la température ambiante $T_{amb}$ peut alors faire intervenir une énergie d'activation $E_a$ représentative du matériau formant chacun des bolomètres actifs $B_{pix\_}(i,j)$ et aveugles $B_b\_(k)$.

Plus particulièrement, le calcul des résistances électriques $R_{Tamb}(i,j)$ et $R_{Tamb}(k)$ est exécuté selon l'une et l'autre des relations suivantes :

$$R_{Tamb}(i,j) = R_{Tr}(i,j) \cdot e^{\frac{qE_a}{k}\left(\frac{1}{T_{amb}} - \frac{1}{T_r}\right)} \quad (5)$$

et

$$R_{Tamb}(k) = R_{Tr}(k) \cdot e^{\frac{qE_a}{k}\left(\frac{1}{T_{amb}} - \frac{1}{T_r}\right)} \quad (6)$$

Le procédé selon la présente invention comprend également une étape b) de détermination des températures effectivement mesurées $T_{sc}(i,j)$ par chacun des bolomètres actifs $B_{pix\_}(i,j)$ à partir des résistances électriques calculées à l'étape a) et des mesures brutes $S_p(i,j)$.

Notamment, la température effectivement mesurée $T_{sc}(i,j)$ par un bolomètre actif $B_{pix\_}(i,j)$ vérifie la relation (7) suivante :

$$S_P(i,j) = Resp(T_{amb},i,j)(T_{sc}(i,j) - T_{amb}) + S_{0,T_{amb}}(i,j) \quad (7)$$

Où :

- Resp($T_c$,i,j) est la responsivité du bolomètre ;
- $S_{0,Tamb}(i,j)$ est la valeur de sortie du bolomètre actif $B_{pix\_}(i,j)$ pour une température effectivement mesurée égale à la température ambiante.

A cet égard, la valeur $S_{0,Tamb}(i,j)$ associée à un bolomètre actif $B_{pix\_}(i,j)$ d'une colonne $C_j$ est fonction de la différence entre les courants $I_{0,pix}(i,j)$ et $I_{0,b}(j)$ susceptibles de circuler, respectivement, dans ledit bolomètre actif $B_{pix\_}(i,j)$ et le bolomètre aveugle $B_b\_(j)$ auquel est associée la colonne Cj pour une température effectivement mesurée égale à la température ambiante.

En d'autres termes, pour chacun des bolomètres actifs, le terme $S_{0,Tamb}(i,j)$ vérifie le relation (8) suivante :

$$S_{0,T_{amb}}(i,j) = VBUS - \frac{T_{int}}{C_{int}} \cdot \left(I_{0,b\,(j)} - I_{0,pix\,(i,j)}\right) (8)$$

les courants $I_{0,pix}(i,j)$ et $I_{0,b}(j)$ étant fonction, respectivement, des résistances électriques $R_{Tamb}(i,j)$ et $R_{Tamb}(j)$.

Il peut donc être déduit des relation (7) et (8), la température effectivement mesurée $T_{sc}(i,j)$ par chacun des bolomètres selon la relation suivante :

$$T_{sc\,(i,j)} = \frac{S_{P(i,j)} - S_{0,T_{amb\,(i,j)}}}{Resp_{(i,j)}} + T_{amb} \quad (9)$$

Le traitement ainsi réalisé sur l'image brute permet d'obtenir une image finale compensée en température exempte d'effet de pixelisation et d'aspect colonnaire.

La présente invention concerne également un programme d'ordinateur, qui lorsqu'il est mis en œuvre par un calculateur, permet d'exécuter le procédé de traitement selon la présente invention.

L'invention concerne en outre un imageur pourvu

- de bolomètres actifs $B_{pix\_}(i,j)$ agencés de manière matricielle selon n lignes $L_i$ et m colonnes $C_j$ ;
- de bolomètres aveugles $B_b\_(k)$, chaque bolomètre aveugle $P_b\_(k)$ étant mis en œuvre pour la mesure différentielle des bolomètres actifs $B_{pix\_}(i,j)$ d'au moins une colonne de bolomètres qui lui est propre, avantageusement chaque bolomètre aveugle $B_b\_(k)$ est associé à une seule colonne $(C_j)$ de bolomètres actifs $B_{pix}\_(i,j)$

- un calculateur doté du programme d'ordinateur.

Enfin, l'invention concerne également un procédé de mise en œuvre de l'imageur selon la présente invention pour la détection, notamment la détection de personnes, dans une pièce.

## Revendications

1. Procédé de traitement d'une image brute **caractérisée par** des mesures brutes $S_p(i,j)$ associées à des bolomètres actifs $B_{pix}\_(i,j)$ d'un imageur (1) agencés de manière matricielle selon n lignes $(L_i)$ et m colonnes $(C_j)$, l'imageur (1) est à une température ambiante $T_{amb}$, et comprend en outre des bolomètres aveugles $B_b\_(k)$, chaque bolomètre aveugle $B_b\_(k)$ étant mis en œuvre pour la mesure différentielle des bolomètres actifs $B_{pix}\_(i,j)$ d'au moins une colonne de bolomètres qui lui est propre, avantageusement chaque bolomètre aveugle $B_b\_(k)$ est associé à une seule colonne $(C_j)$ de bolomètres actifs $B_{pix}\_(i,j)$, le procédé, exécuté par un calculateur (4) pourvu d'une mémoire, comprend les étapes suivantes :

   a) une étape de calcul des résistances électriques $R_{Tc}(i,j)$ et $R_{Tc}(k)$, à la température $T_{amb}$, respectivement, des bolomètres actifs et aveugles à partir de leurs résistances électriques à une température de référence $T_r$, respectives, $R_{Tr}(i,j)$ et $R_{Tr}(k)$, mémorisées dans la mémoire ;
   b) une étape de détermination des températures effectivement mesurées $T_{sc}(i,j)$ par chacun des bolomètres actifs $B_{pix}\_(i,j)$ à partir des résistances électriques calculées à l'étape a) et des mesures brutes $S_p(i,j)$.

2. Procédé selon la revendication 1, dans lequel l'étape a) de calcul des résistances électriques $R_{Tc}(i,j)$ et $R_{Tc}(k)$, à la température $T_{amb}$, est exécutée à partir d'une énergie d'activation $E_a$ représentative du matériau formant chacun des bolomètres actifs $B_{pix}\_(i,j)$ et aveugles $B_b\_(k)$.

3. Procédé selon la revendication 2, dans lequel le calcul des résistances électriques à la température ambiante, et notées $R_{Tamb}(i,j)$ et $R_{Tamb}(k)$, est exécuté selon l'une et l'autre des relations suivantes :

$$R_{Tamb}(i,j) = R_{Tr}(i,j) \cdot e^{\frac{qE_a}{k}\left(\frac{1}{T_{amb}} - \frac{1}{T_r}\right)}$$

et

$$R_{Tamb}(k) = R_{Tr}(k) \cdot e^{\frac{qE_a}{k}\left(\frac{1}{T_{amb}} - \frac{1}{T_r}\right)}$$

4. Procédé selon l'une des revendications 1 à 3, dans lequel la température effectivement mesurée $T_{sc}(i,j)$ par un bolomètre actif $B_{pix}\_(i,j)$ vérifie la relation suivante :

$$S_P(i,j) = Resp(T_{amb},i,j)(T_{sc}(i,j) - T_{amb}) + S_{0,T_{amb}}(i,j)$$

Où:

   - $Resp(T_c,i,j)$ est la responsivité du bolomètre ;
   - $S_{0,Tamb}(i,j)$ est la valeur de sortie du bolomètre actif $B_{pix}\_(i,j)$ pour une température effectivement mesurée égale à la température ambiante.

5. Procédé selon la revendication 4, dans lequel la valeur $S_{0,Tamb}(i,j)$ associée à un bolomètre actif $B_{pix}\_(i,j)$ d'une colonne $(C_j)$ est fonction de la différence entre les courants $I_{0,pix}(i,j)$ et $I_{0,b}(j)$ susceptibles de circuler, respectivement, dans ledit bolomètre actif $B_{pix}\_(i,j)$ et le bolomètre aveugle $B_b\_(k)$ auquel est associée la colonne (Cj) pour une température effectivement mesurée égale à la température ambiante.

6. Procédé selon l'une des revendications 1 à 5, l'étape a) est précédée d'une étape a1) d'acquisition des mesures

brutes $S_p(i,j)$ au niveau d'amplificateurs à transimpédance capacitive (CTIA) agencés de sorte que l'ensemble des bolomètres actifs $B_{pix\_}(i,j)$ de chaque colonne $(C_j)$ ainsi que le bolomètre aveugle $B_{b\_}(k)$ auquel est associée ladite colonne (Cj) sont connectés à une entrée négative (E⁻) d'un des amplificateurs à transimpédance capacitive (CTIA), l'entrée positive (E⁺) dudit amplificateur (CTIA) recevant une tension de référence ($V_{bus}$).

**7.** Procédé selon la revendication 6, dans lequel entre chacun des bolomètres, actifs et aveugles, et l'amplificateur à transimpédance capacitive (CTIA) auquel ces derniers sont connectées, viennent s'interposer des dispositifs interrupteurs, notamment des transistors, commandés par le calculateur.

**8.** Procédé selon la revendication 7, dans lequel préalablement à la mise en œuvre du procédé, une étape de mesure des résistances électriques $R_{Tr}(i,j)$ et $R_{Tr}(k)$ est exécutée.

**9.** Procédé selon la revendication 8, dans lequel la détermination de la résistance électrique $R_{Tr}(i,j)$ et $R_{Tr}(k)$ d'un bolomètre actif $B_{pix\_}(i,j)$ d'une colonne (Cj) ou du bolomètre aveugle $B_{b\_}(k)$ auquel est associée ladite colonne (Cj) comprend une mesure du courant susceptible de circuler dans le bolomètre concerné.

**10.** Procédé selon la revendication 9, dans lequel la mesure du courant susceptible de circuler dans le bolomètre concerné comprend la fermeture de l'interrupteur s'interposant entre ledit bolomètre concerné et l'amplificateur à transimpédance capacitive (CTIA), les autres interrupteurs étant maintenus ouverts.

**11.** Programme d'ordinateur, qui lorsqu'il est mis en œuvre par un calculateur, permet d'exécuter le procédé selon l'une des revendications 1 à 10.

**12.** Imageur pourvu

- de bolomètres actifs $B_{pix\_}(i,j)$ d'un imageur (1) agencés de manière matricielle selon n lignes $(L_i)$ et m colonnes $(C_j)$ ;
- de bolomètres aveugles $B_{b\_}(k)$, chaque bolomètre aveugle $P_{b\_}(k)$ étant mis en œuvre pour la mesure différentielle des bolomètres actifs $B_{pix\_}(i,j)$ d'au moins une colonne de bolomètres qui lui est propre, avantageusement chaque bolomètre aveugle $B_{b\_}(k)$ est associé à une seule colonne $(C_j)$ de bolomètres actifs $B_{pix\_}(i,j)$
- un calculateur doté du programme d'ordinateur selon la revendication 11.

**13.** Mise en œuvre de l'imageur selon la revendication 12 pour la détection, notamment la détection de personnes, dans une pièce.

**Patentansprüche**

**1.** Verfahren zum Verarbeiten eines Rohbildes, **gekennzeichnet durch** Rohmessungen $S_p(i,j)$, die aktiven Bolometern $B_{pix\_}(i,j)$ eines Bildgebers (1) zugeordnet sind, die matrixartig in n Zeilen $(L_i)$ und m Spalten $(C_j)$ angeordnet sind, wobei der Bildgeber (1) eine Umgebungstemperatur $T_{amb}$ hat und ferner Blind-Bolometer $B_{b\_}(k)$ aufweist, wobei jedes Blind-Bolometer $B_{b\_}(k)$ für die Differenzmessung der aktiven Bolometer $B_{pix\_}(i,j)$ mindestens einer ihm eigenen Bolometerspalte verwendet wird, wobei vorteilhafterweise jedes Blindbolometer $B_{b\_}(k)$ einer einzigen Spalte $(C_j)$ von aktiven Bolometern $B_{pix\_}(i,j)$ zugeordnet ist, wobei das Verfahren, das von einem mit einem Speicher versehenen Rechner (4) ausgeführt wird, die folgenden Schritte umfasst:

a) einen Schritt des Berechnens der elektrischen Widerstände $R_{Tc}(i,j)$ und $R_{Tc}(k)$ bei der Temperatur $T_{amb}$ der aktiven Bolometer bzw. Blind-Bolometer ausgehend von ihren jeweiligen elektrischen Widerständen $R_{Tr}(i,j)$ bzw. $R_{Tr}(k)$ bei einer Referenztemperatur $T_r$, die im Speicher hinterlegt sind;
b) einen Schritt des Ermittelns der durch jedes der aktiven Bolometer $B_{pix\_}(i,j)$ tatsächlich gemessenen Temperaturen $T_{sc}(i,j)$ aus den in Schritt a) berechneten elektrischen Widerständen und den Rohmessungen $S_p(i,j)$.

**2.** Verfahren nach Anspruch 1, wobei Schritt a) des Berechnens der elektrischen Widerstände $R_{Tc}(i,j)$ und $R_{Tc}(k)$ bei der Temperatur $T_{amb}$ ausgehend von einer Aktivierungsenergie $E_a$ ausgeführt wird, die für das Material repräsentativ ist, aus dem jedes der aktiven Bolometer $B_{pix\_}(i,j)$ und der Blind-Bolometer $B_{b\_}(k)$ besteht.

**3.** Verfahren nach Anspruch 2, wobei das Berechnen der elektrischen Widerstände bei Raumtemperatur, $R_{Tamb}(i,j)$ und $R_{Tamb}(k)$ genannt, nach einer der folgenden Beziehungen durchgeführt wird:

$$R_{Tamb}(i, j) = R_{Tr}(i, j) \cdot e^{\frac{qEa}{k}\left(\frac{1}{T_{amb}} - \frac{1}{T_r}\right)}$$

und

$$R_{Tamb}(k) = R_{Tr}(k) \cdot e^{\frac{qEa}{k}\left(\frac{1}{T_{amb}} - \frac{1}{T_r}\right)}$$

4. Verfahren nach einem der Ansprüche 1 bis 3, wobei die von einem aktiven Bolometer $B_{pix\_}(i, j)$ tatsächlich gemessene Temperatur $T_{sc}(i, j)$ die folgende Beziehung erfüllt:

$$S_p(i, j) = Resp \, (T_{amb}, \, i, \, j) \, (T_{sc} \, (i, \, j) - T_{amb}) + S_{0, \, Tamb} \, (i, \, j)$$

worin

- $Resp(T_c, i, j)$ die Responsivität des Bolometers ist;
- $S_{0,Tamb}(i, j)$ der Ausgangswert des aktiven Bolometers $B_{pix\_}(i, j)$ für eine tatsächlich gemessene Temperatur gleich der Umgebungstemperatur ist.

5. Verfahren nach Anspruch 4, wobei der einem aktiven Bolometer $B_{pix\_}(i, j)$ einer Spalte $(C_j)$ zugeordnete Wert $S_{0,Tamb}(i, j)$ Funktion der Differenz zwischen den Strömen $I_{0,pix}(i, j)$ und $I_{0,b}(j)$ ist, die in dem aktiven Bolometer $B_{pix\_}(i, j)$ bzw. dem Blind-Bolometer $B_{b\_}(k)$, welches der Spalte $(C_j)$ zugeordnet ist, bei einer effektiv gemessenen Temperatur gleich der Umgebungstemperatur fließen können.

6. Verfahren nach einem der Ansprüche 1 bis 5, wobei dem Schritt a) ein Schritt a1) des Erfassens der Rohmessungen $S_p(i, j)$ an kapazitiven Transimpedanzverstärkern (CTIA) vorausgeht, die so angeordnet sind, dass alle aktiven Bolometer $B_{pix\_}(i, j)$ jeder Spalte $(C_j)$ sowie das Blind-Bolometer $B_{b\_}(k)$, welches der Spalte $(C_j)$ zugeordnet ist, mit einem negativen Eingang (E⁻) eines der kapazitiven Transimpedanzverstärker (CTIA) verbunden sind, wobei der positive Eingang (E⁺) des Verstärkers (CTIA) eine Referenzspannung $(V_{bus})$ aufnimmt.

7. Verfahren nach Anspruch 6, wobei zwischen jedem der aktiven Bolometer und Blind-Bolometer und dem kapazitiven Transimpedanzverstärker (CTIA), an den letztere angeschlossen sind, vom Rechner gesteuerte Schalteinrichtungen, insbesondere Transistoren, zwischengeschaltet sind.

8. Verfahren nach Anspruch 7, wobei vor der Durchführung des Verfahrens ein Schritt des Messens der elektrischen Widerstände $R_{Tr}(i, j)$ und $R_{Tr}(k)$ erfolgt.

9. Verfahren nach Anspruch 8, wobei das Ermitteln des elektrischen Widerstands $R_{Tr}(i, j)$ und $R_{Tr}(k)$ eines aktiven Bolometers $B_{pix\_}(i, j)$ einer Spalte $(C_j)$ oder des Blind-Bolometers $B_{b\_}(k)$, welches der Spalte $(C_j)$ zugeordnet ist, eine Messung des Stroms umfasst, der in dem betreffenden Bolometer fließen kann.

10. Verfahren nach Anspruch 9, wobei die Messung des Stroms, der in dem betreffenden Bolometer fließen kann, das Schließen des Schalters umfasst, der zwischen dem betreffenden Bolometer und dem kapazitiven Transimpedanzverstärker (CTIA) zwischengeschaltet ist, wobei die anderen Schalter offen gehalten werden.

11. Computerprogramm, das, wenn es von einem Rechner ausgeführt wird, die Durchführung des Verfahrens nach einem der Ansprüche 1 bis 10 ermöglicht.

12. Bildgeber, enthaltend

- aktive Bolometer $B_{pix\_}(i, j)$ eines Bildgebers (1), die matrixartig in n Zeilen $(L_i)$ und m Spalten $(C_j)$ angeordnet sind;
- Blind-Bolometer $B_{b\_}(k)$, wobei jedes Blind-Bolometer $P_{b\_}(k)$ zur Differenzmessung der aktiven Bolometer $B_{pix\_}(i, j)$ mindestens einer ihm eigenen Bolometerspalte verwendet wird, wobei vorteilhafterweise jedes Blind-Bolometer $B_{b\_}(k)$ einer einzigen Spalte $(C_j)$ aktiver Bolometer $B_{pix\_}(i, j)$ zugeordnet ist,

- einen Rechner mit dem Computerprogramm nach Anspruch 11.

13. Verwendung des Bildgebers nach Anspruch 12 zur Erfassung, insbesondere zur Erfassung von Personen, in einem Raum.

**Claims**

1. Method for processing a raw image **characterised by** raw measurements $S_p(i,j)$ associated with active bolometers $B_{pix\_}(i,j)$ of an imager (1) arranged in a matrix array along n rows ($L_i$) and m columns ($C_j$), the imager (1) is at an ambient temperature $T_{amb}$, and further comprises blind bolometers $B_{b\_}(k)$, each blind bolometer $B_{b\_}(k)$ being used for the differential measurement of the active bolometers $B_{pix\_}(i,j)$ of at least one column of bolometers specific thereto, advantageously each blind bolometer $B_{b\_}(k)$ is associated with a single column ($C_j$) of active bolometers $B_{pix\_}(i,j)$, the method, executed by a computer (4) provided with a memory, comprises the following steps:

   a) a step of calculating the electrical resistances $R_{Tc}(i,j)$ and $R_{Tc}(k)$, at the temperature $T_{amb}$, respectively, of the active and blind bolometers from their respective electrical resistances $R_{Tr}(i,j)$ and $R_{Tr}(k)$ at a reference temperature $T_r$, stored in the memory;
   b) a step of determining the temperatures actually measured $T_{sc}(i,j)$ by each of the active bolometers $B_{pix\_}(i,j)$ from the electrical resistances calculated in step a) and from the raw measurements $S_p(i,j)$.

2. Method according to claim 1, wherein step a) of calculating the electrical resistances $R_{Tc}(i,j)$ and $R_{Tc}(k)$, at the temperature $T_{amb}$, is executed based on an activation energy $E_a$ representative of the material forming each of the active $B_{pix\_}(i,j)$ and blind $B_{b\_}(k)$ bolometers.

3. Method according to claim 2, wherein the calculation of the electrical resistances at ambient temperature, and annotated $R_{Tamb}(i,j)$ and $R_{Tamb}(k)$, is executed according to one and the other of the following relations:

$$R_{Tamb}(i,j) = R_{Tr}(i,j) \cdot e^{\frac{qE_a}{k}\left(\frac{1}{T_{amb}} - \frac{1}{T_r}\right)}$$

and

$$R_{Tamb}(k) = R_{Tr}(k) \cdot e^{\frac{qE_a}{k}\left(\frac{1}{T_{amb}} - \frac{1}{T_r}\right)}$$

4. Method according to one of claims 1 to 3, wherein the temperature actually measured $T_{sc}(i,j)$ by an active bolometer $B_{pix\_}(i,j)$ verifies the following relation:

$$S_p(i,j) = Resp(T_{amb}, i, j)(T_{sc}(i,j) - T_{amb}) + S_{0,T_{amb}}(i,j)$$

Where:

   - $Resp(T_c, i, j)$ is the responsivity of the bolometer;
   - $S_{0,Tamb}(i,j)$ is the output value of the active bolometer $B_{pix\_}(i,j)$ for an actually measured temperature equal to the ambient temperature.

5. Method according to claim 4, wherein the value $S_{0,Tamb}(i,j)$ associated with an active bolometer $B_{pix\_}(i,j)$ of a column ($C_j$) is dependent on the difference between the currents $I_{0,pix}(i,j)$ and $I_{0,b}(j)$ capable of circulating, respectively, in said active bolometer $B_{pix\_}(i,j)$ and the blind bolometer $B_{b\_}(k)$ with which the column ($C_j$) is associated for an actually measured temperature equal to the ambient temperature.

6. Method according to one of claims 1 to 5, step a) is preceded by a step a1) of acquiring the raw measurements $S_p(i,j)$ at the capacitive transimpedance amplifiers (CTIA) arranged such that the set of active bolometers $B_{pix\_}(i,j)$ of each column ($C_j$) as well as the blind bolometer $B_{b\_}(k)$ with which said column (Cj) is associated are connected to a negative input ($E^-$) of one of the capacitive transimpedance amplifiers (CTIA), the positive input ($E^+$) of said amplifier (CTIA) receiving a reference voltage ($V_{bus}$).

7. Method according to claim 6, wherein between each of the bolometers, active and blind, and the capacitive transimpedance amplifier (CTIA) to which the latter are connected, switch devices, particularly transistors, controlled by the computer, are inserted.

8. Method according to claim 7, wherein prior to using the method, a step of measuring the electrical resistances $R_{Tr}(i,j)$ and $R_{Tr}(k)$ is executed.

9. Method according to claim 8, wherein the determination of the electrical resistances $R_{Tr}(i,j)$ and $R_{Tr}(k)$ of an active bolometer $B_{pix\_}(i,j)$ of a column ($C_j$) or of the blind bolometer $B_b\_(k)$ with which said column (Cj) is associated comprises a measurement of the current capable of circulating in the bolometer in question.

10. Method according to claim 9, wherein the measurement of the current capable of circulating in the bolometer in question comprises the closure of the switch inserted between said bolometer in question and the capacitive transimpedance amplifier (CTIA), the other switches being kept open.

11. Computer program, which when it is used by a computer, makes it possible to execute the method according to one of claims 1 to 10.

12. Imager provided

- with active bolometers $B_{pix\_}(i,j)$ of an imager (1) arranged in a matrix array along n rows ($L_i$) and m columns ($C_j$);
- blind bolometers $B_b\_(k)$, each blind bolometer $B_b\_(k)$ being used for the differential measurement of the active bolometers $B_{pix\_}(i,j)$ of at least one column of bolometers specific thereto, advantageously each blind bolometer $B_b\_(k)$ is associated with a single column ($C_j$) of active bolometers $B_{pix\_}(i,j)$
- a computer equipped with the computer program according to claim 11.

13. Use of the imager according to claim 12 for detection, particularly the detection of persons, in a room.

FIG.1

FIG.2

FIG.3

FIG.4a

FIG.4b

**EP 3 651 449 B1**

## RÉFÉRENCES CITÉES DANS LA DESCRIPTION

**Documents brevets cités dans la description**

- EP 2940991 B1
- US 2010237245 A1

- EP 2012101 B1